(19) Europäisches Patentamt
European Patent Office
Office européen des brevets

(11) **EP 3 373 443 A1**

(12) **EUROPEAN PATENT APPLICATION**

(43) Date of publication:
**12.09.2018 Bulletin 2018/37**

(51) Int Cl.:
**H02P 6/10** *(2006.01)*          **H02P 21/05** *(2006.01)*
**H02P 21/18** *(2016.01)*          **H02P 8/32** *(2006.01)*

(21) Application number: **18159965.5**

(22) Date of filing: **05.03.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.03.2017   DK 201770172**

(71) Applicant: **OJ Electronics A/S**
**6400 Sønderborg (DK)**

(72) Inventors:
• **PETERSEN, Jörn**
  **6400 Sønderborg (DK)**
• **LAURITSEN, Kim**
  **6400 Sønderborg (DK)**

(74) Representative: **Zacco Denmark A/S**
**Arne Jacobsens Allé 15**
**2300 Copenhagen S (DK)**

(54) **SPEED RIPPLE COMPENSATION**

(57)    Disclosed is a method for controlling a motor (6), and an associated motor system (2, 2') comprising a processing unit (4) and a motor (6). The method comprises:
obtaining (102) rotational speed of the rotor (10); obtaining a speed ripple value (206) by comparing lowest rotational speed with highest rotational speed within a speed ripple sample time; and adjusting the d-current through the motor (6) based on the speed ripple value (206) and a speed ripple threshold (208).

**Fig. 4**

## Description

The present disclosure relates to a method for controlling a motor, such as a motor comprising a rotor having at least one permanent magnet and a stator configured to provide a magnetic field for rotation of the rotor. The present disclosure also relates to an associated motor system. In particular, a motor system for driving a rotational heat exchanger.

BACKGROUND

Motor controllers or drives are often facing the challenge of mechanical oscillations, which may cause acoustic noise in the mechanical system. This noise may be audible and may also result in a less stable regulation of the motor and a less efficient operation of the complete system. Ultimately such noise may lead to failure of the system.
The noise is usually caused by some high-frequency speed ripple, i.e. fluctuation of the speed, which may trigger the mechanical system at certain speeds or loads.
In a belt-driven motor control system, the oscillations may even be visible as vibrations of the rubber belt used for connecting the motor to the load to rotate.
These vibrations may be lead back in to the regulation algorithms of the motor controller and may cause the motor to run less efficient and/or unstable.

A step motor may comprise a stator with "cogs". For example, such a motor may have 300 cogs in each mechanical revolution. Such a motor may have a significant "cogging torque", which results in big variations of the current required to run the motor at the required speed. In the example of a motor having 300 cogs, the current may rise and fall 300 times for every mechanical rotation.
At lower speeds the cogging torque may be very significant in relation to the actual torque required to drive the motor. At higher speeds the impact of the cogging torque may be reduced.
The cogging torque may cause speed ripples, i.e. fluctuations of the actual rotational speed of the motor.

A speed controller of the drive may attempt to compensate for the speed variations by adjusting the current request. However, the speed controller may not be fast enough to eliminate the effects of the cogging torque.
The cogging torque may not be distributed evenly over a mechanical rotation. Depending on the mechanical construction of the motor, some cogs may be more dominant than others. This may lead to harmonics at different speeds and loads, depending on the mechanical system and the gain of the speed controller in the drive.
From US 2016/0254772 A1 is known a method for controlling a permanent magnet synchronous motor, which method comprises obtaining feedback speed, rotational speed of the rotor; obtaining a fluctuation speed, a speed ripple value by comparing the rotational speed with a reference speed; and adjusting the d-current through the motor based on the speed ripple value.

SUMMARY

There is a need for a regulating system to eliminate or at least reduce the mechanical oscillations of a motor system.
The present disclosure provides a way to detect the mechanical oscillations in the regulation system and a way to reduce them.
Accordingly, a method, such as a method for controlling a motor is provided.
In particular a method is provided for controlling a motor comprising a rotor having at least one permanent magnet and a stator configured to provide a magnetic field for rotation of the rotor, and wherein the magnetic field is controlled by a q-current and a d-current. The q-current controls a q-component of the magnetic field causing torque on the rotor. The d-current controls a d-component of the magnetic field perpendicular to the q-component, e.g. changing the magnetic flux. Such motor control may be known as Field-Oriented-Control.
The disclosed method comprises: obtaining rotational speed of the rotor; obtaining a speed ripple value by comparing lowest rotational speed with highest rotational speed within a speed ripple sample time; and adjusting the d-current through the motor based on the speed ripple value and a speed ripple threshold.
Also disclosed is a motor system comprising a motor and a processing unit.
The motor comprises a rotor having at least one permanent magnet and a stator configured to provide a magnetic field for rotation of the rotor, and wherein the magnetic field is controlled by a q-current and a d-current. The q-current controls a q-component of the magnetic field causing torque on the rotor. The d-current controls a d-component of the magnetic field perpendicular to the q-component.
The processing unit is connected to the motor. The processing unit may be configured to perform the steps of the method as also disclosed, For example, the processing unit is configured to: obtain rotational speed of the rotor; obtain a speed ripple value by comparing lowest rotational speed with highest rotational speed within a speed ripple sample time; and adjust the d-current through the motor based on the speed ripple value.

The motor system may comprise a rotational heat exchanger. The rotational heat exchanger may be coupled to the rotor of the motor, e.g. by a belt, such that rotation of the rotor causes rotation of the rotational heat exchanger.

It is an advantage of the present disclosure that it may reduce the speed variations in a motor.

It is a further advantage of the present disclosure that mechanical vibrations in a system, driven by a motor may be reduced. Consequently wear and tear on the mechanical system may be reduced, and/or risk of mechanical failure may be reduced.

The motor may be step motor. The rotor may have a plurality of cogs. The plurality of cogs may be distributed around the perimeter of the rotor facing the stator.

The present disclosure may be particular useful in applications using a step motor, such as a step motor comprising a rotor with cogs, since such a motor may have a significant "cogging torque", which results in big variations of the current required to run the motor at the required speed.

The present disclosure may be particular useful in applications where the load is not directly connected to the motor axis, such as in system where the load is connected to the motor axis by a belt, such as a rubber belt. In such a system, the elasticity of the rubber belt may increase the effect of speed ripples. For example, the motor may be configured to drive a heat exchanger.

It is a further advantage of the disclosure that regulation is provided dynamically, i.e. based on the rotational speed of the rotor, e.g. as compared to providing a regulation that is based on position of the rotor. This is in particular an advantage in systems where speed ripples may be influence by factors than internal characteristics of the motor.

Adjusting the d-current may comprise increasing the d-current through the motor, e.g. to increase the d-component of the magnetic field. For example, in accordance with the speed ripple value being above the speed ripple threshold, increasing the d-current through the motor to increase the d-component of the magnetic field.

Alternatively, or additionally, in accordance with the speed ripple value being above the speed ripple threshold and the d-current being below a d-current threshold, increasing the d-current through the motor to increase the d-component of the magnetic field. The d-current threshold may be based on the q-current. For example, the d-current threshold may be between 1-20 % of the q-current, such as between 5-15 %, such as 10 %. The d-current may be limited in order to maintain sufficient torque on the rotor.

Increasing the d-current may be based on the magnitude of the speed ripple value. For example, the d-current may be increased more if the speed ripple value is high, and less if the speed ripple value is low. For example the d-current may be increased proportional to the magnitude of the speed ripple value.

Adjusting the d-current may comprises decreasing the d-current through the motor, e.g. to decrease the d-component of the magnetic field. For example, in accordance with the speed ripple value being below the speed ripple threshold, decreasing the d-current through the motor to decrease the d-component of the magnetic field.

Adjusting the d-current may be further based on the rotational speed of the rotor. For example, in accordance with the rotational speed being below a rotational speed threshold, the d-current may be set to a constant d-current value. The rotational speed threshold may be between 10-40 RPM, such as between 20-30 RPM, such as 25 RPM.

Reduction of speed ripple by controlling the d-current may be best suited for rotational speed above a rotational speed threshold. It may be most suitable to maintain a constant d-current if the rotational speed is below a rotational speed threshold. For example, if the rotational speed is low increased torque may be necessary to maintain a (near) constant rotation of the rotor. Adjusting d-current may influence the torque. Other regulation mechanisms regulating the torque of the rotor may cause continuous adjustment of the d-current at low rotational speed to be unfavourable.

The constant d-current value may be 0 mA. Alternatively, the constant d-current value may be above 0 mA. A constant d-current value above 0 mA may cause increased stability of the motor and/or increase back-EMF providing a better basis for regulating q-current.

Lowest rotational speed and highest rotational speed within the speed ripple sample time, e.g. a time window, may be compared, e.g. subtracted, to provide the speed ripple value. The speed ripple sample time may be between 10-500 ms, such as 50 ms or 100 ms. For example if the speed ripple sample time is 100 ms, the lowest measured rotational speed within the last 100 ms, is compared with highest measured rotational speed within the last 100 ms, and the speed ripple value may be obtained by:

$$\text{speed ripple value} = \text{highest rotational speed} - \text{lowest rotational speed}.$$

The rotational speed of the motor may be measured with a speed sampling rate. For example, measuring rotational speed of the motor may comprise measuring rotational speed of the motor with a speed sampling rate. The speed sampling rate may be more than 100 Hz, such as more than 1000 Hz, such as more than 10000 Hz. The speed sampling rate may, for example, be 100 Hz, 500 Hz, 1000 Hz, 5000 Hz, or 10000 Hz.

The speed ripple threshold may designate a tolerated amount of speed ripples, such as how much the rotational speed of the rotor should be allowed to vary. The speed ripple threshold may be set to an absolute value, such as an absolute value based on a speed limit of the motor. The speed ripple threshold may be between 0.5 and 5 % of the speed limit of the motor, such as 1 % of the speed limit of the motor. For example, a speed limit of the motor may be 440 RPM, and the speed ripple threshold may be set to 1 % of the speed limit of the motor, i.e. 4.4 RPM.

The motor may be set to provide a rotational speed at a target rotational speed, such as 50 RPM. The actual rotational speed of the rotor may vary around 50 RPM, e.g. between 40 RPM and 60 RPM. The speed ripple threshold may be based on the target rotational speed. The speed ripple threshold may be between 0.5 and 5 % of the target rotational speed, such as 1 % of the target rotational speed.

The q-current may be adjusted to attempt to achieve rotational speed of the rotor at the target rotational speed. The q-current may be adjusted by a q-current controller.

The rotational speed of the rotor may be obtained by using a tachometer provided on the rotor. Alternatively or additionally, obtaining the rotational speed of the rotor may be performed using a back EMF observer. A back EMF observer may determine the rotational speed of the rotor based on electrical current and applied voltage, and using mathematical modelling.

BRIEF DESCRIPTION OF THE DRAWINGS

The above and other features and advantages of the present invention will become readily apparent to those skilled in the art by the following detailed description of exemplary embodiments thereof with reference to the attached drawings, in which:

Fig. 1    illustrates a flow chart of an exemplary method,

Fig. 2    illustrates a flow chart of an exemplary method,

Fig. 3    schematically illustrates an exemplary motor system,

Fig. 4    schematically illustrates an exemplary motor system,

Fig. 5    illustrates a schematic of an exemplary regulation,

Fig. 6    shows exemplary traces of motor data, and

Fig. 7    shows exemplary traces of motor data.

DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

Throughout, the same reference numerals are used for identical or corresponding parts.

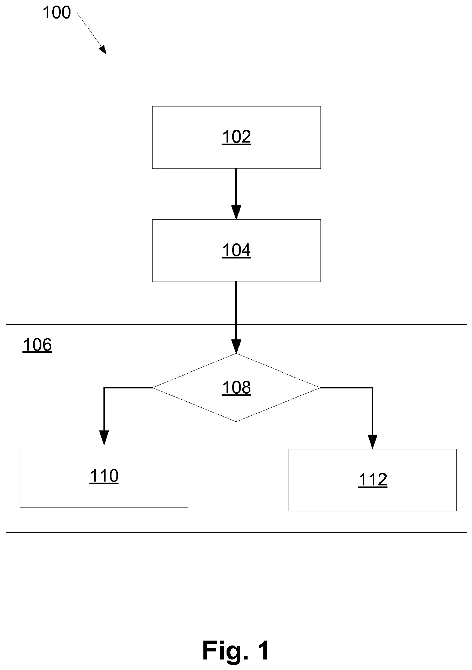

Fig. 1 illustrates a flow chart of an exemplary method 100 for controlling a motor. The method 100 is for controlling a motor comprising a rotor having at least one permanent magnet and a stator configured to provide a magnetic field for rotation of the rotor.

The magnetic field of the motor is controlled by a q-current and a d-current. Practically, the motor may be motor having a three-phase stator, and the q-current and the d-current input may be transformed in order to achieve the practical input on each of the three phases of the motor. The transformation is configured such that the q-current controls a q-component of the magnetic field causing torque on the rotor, and the d-current controls a d-component of the magnetic field perpendicular to the q-component. The transformation is configured such that the reference frame of the q-component and the d-component is centered on the rotor and follows the rotation of the rotor. This may also be known as Field-Oriented-Control (FOC).

The method 100 comprises: obtaining 102 rotational speed of the rotor; obtaining 104 a speed ripple value; and adjusting 106 the d-current through the motor.

Obtaining 104 a speed ripple value may be achieved by comparing lowest rotational speed obtained with highest rotational speed obtained within a speed ripple sample time.

Adjusting 106 the d-current through the motor is based on the speed ripple value and a speed ripple threshold. For example adjusting 106 the d-current depending on whether the speed ripple value is above or below the speed ripple threshold. Adjusting 106 the d-current will adjust the d-component of the magnetic field, such as adjust the magnetic flux of the magnetic field.

Adjusting 106 the d-current may comprise, in accordance 108 with the speed ripple value being above the speed ripple threshold, increasing 110 the d-current through the motor to increase the d-component of the magnetic field.

Adjusting 106 the d-current may comprise, in accordance 108 with the speed ripple value being below the speed ripple threshold, decreasing 112 the d-current through the motor to decrease the d-component of the magnetic field.

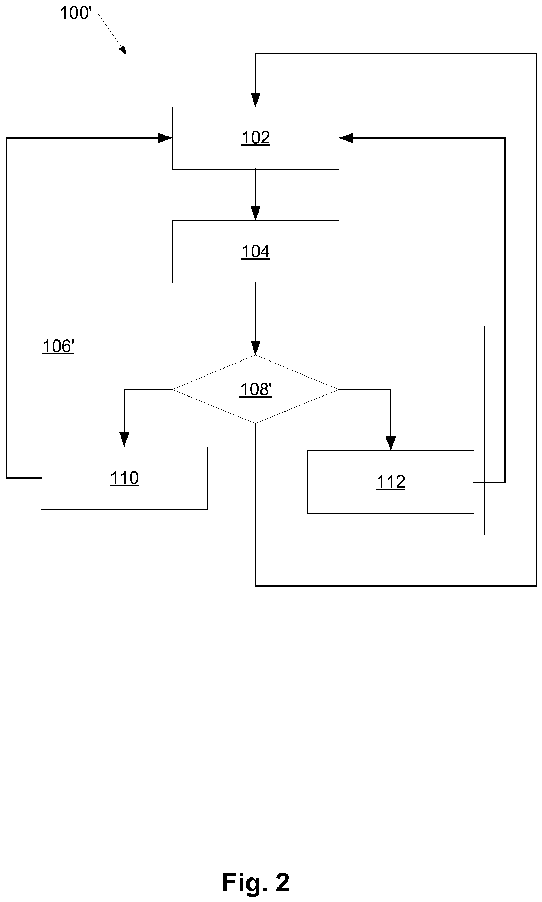

Fig. 2 illustrates a flow chart of an exemplary method 100'. The method 100' comprises comparable features as the method 100 of Fig. 1. However, adjusting 106' the d-current is expanded slightly compared to adjusting 106 as described in relation to the method 100 of Fig. 1.

Adjusting 106' the d-current may comprise, in accordance 108 with the speed ripple value being above the speed ripple threshold and the d-current being below a d-current threshold, increasing the d-current through the motor to increase the d-component of the magnetic field. The d-current threshold may be based on the q-current. For example, the d-current threshold may be configured such that the d-current is less than 10% of the q-current. The d-current threshold may prevent that the d-current is increased to an amount where rotation of the rotor is inhibited or adversely affected.

Adjusting 106' the d-current may comprise, in accordance 108' with the speed ripple value being below the speed ripple threshold, decreasing 112 the d-current through the motor to decrease the d-component of the magnetic field.

Method 100' further illustrate that after adjusting 106' the d-current based on the speed ripple value, the method 100' returns to the starting point of obtaining 102 rotational speed of the rotor.

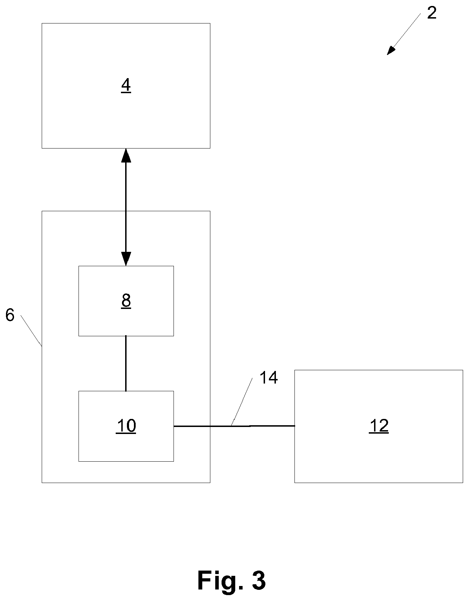

Fig. 3 schematically illustrates an exemplary motor system 2. The motor system 2 comprises a processing unit 4 and a motor 6. The motor 6 comprises a stator 8 and a rotor 10. The rotor 10 has at least one permanent magnet. The stator 8 comprises is configured to provide a magnetic field for rotation of the rotor. The stator 8 comprises a plurality of electric coils providing the magnetic field upon flow of electrical current.

The magnetic field of the motor 6 is controlled by a q-current and a d-current. Practically, the motor 6 may have a three-phase stator 8, and the q-current and the d-current input may be transformed in order to achieve the practical input on each of the three phases of the motor 6. The transformation is configured such that the q-current controls a q-component of the magnetic field causing torque on the rotor 10, and the d-current controls a d-component of the magnetic field perpendicular to the q-component. The transformation is configured such that the reference frame of the q-component and the d-component is centered on the rotor 10 and follows the rotation of the rotor 10.

This may also be known as Field-Oriented-Control (FOC).

The processing unit 4 is connected to the motor 6. More specifically the processing unit may be connected to the stator 8. The processing unit 4 is configured to control the motor 6 and to receive information, such as current and voltage, from the motor 6. The processing unit 4 may be configured to control the magnetic field of the stator in order to control the rotation of the rotor.

The processing unit 4 is configured to: obtain rotational speed of the rotor 10; obtain a speed ripple value by comparing lowest rotational speed with highest rotational speed within a speed ripple sample time; and adjust the d-current through the motor based on the speed ripple value.

The motor system 2 further shows an optional heat exchanger 12 connected 14 to the rotor 10 of the motor 6. The connection 14 between the heat exchanger 12 and the rotor 10 may comprise a belt, such as a belt with an elasticity, such as a low elasticity. The connection 14 mechanically transfers rotation of the rotor 10 to the heat exchanger 12, such that the heat exchanger 12 is rotated upon rotation of the rotor 10.

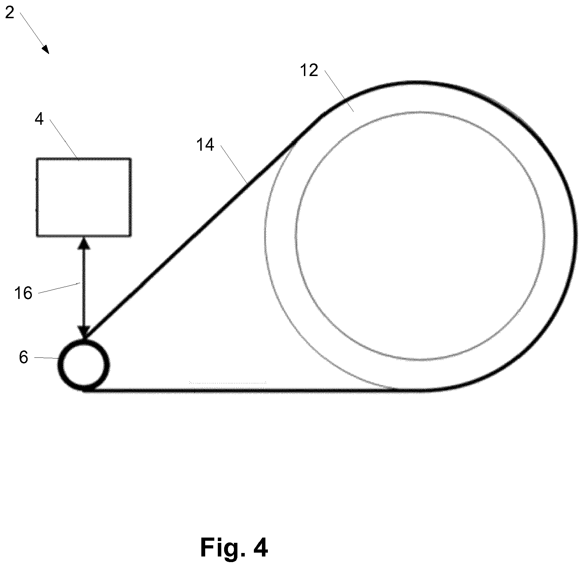

Fig. 4 alternatively schematically illustrates the exemplary motor system 2.

The motor 6 is shown to be connected to the rotational heat exchanger 12 by connection 14, here exemplified by a belt 14. Hence, rotation of the rotor of the motor 6 will turn the belt 14, which will cause rotation of the rotational heat exchanger 12.

The processing unit 4 is configured to control the motor 6. The processing unit 4 is connected to the motor 6 in order to transmit and receive signals to/from the motor 6. For example, the processing unit 4 receives a motor readout from the motor 6, indicative of rotational speed, current drawn by the motor, etc. The processing unit 4 may provide control signals to the motor 6, e.g. based on the received motor readout.

For example, as described in more detail above, the processing unit 4 is configured to obtain rotational speed of the rotor of the motor 6, e.g. based on the motor readout. And, the processing unit 4 is configured to control the motor in order to adjust the d-current through the motor, e.g. based on the obtained rotational speed.

Speed variations, such as speed ripples, of the motor 6 may cause vibrations in the belt 14 providing the mechanical connection between the motor 6 and the rotational heat exchanger 12. The vibrations of the belt 14 may cause increased stress in the belt, and may eventually lead to mechanical failure. Hence, in particular in systems like the system 2 as exemplified, decreasing the speed ripples of the motor 6 is of high interest.

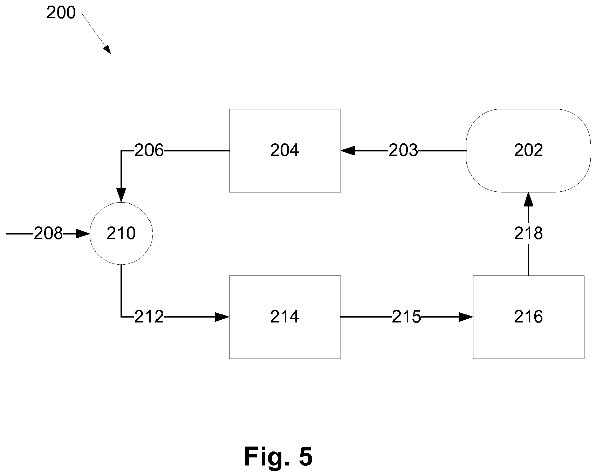

Fig. 5 illustrates a schematic of an exemplary regulation 200, such as a regulation in accordance with the method as described in relation to previous figures.

The motor 202, such as similar to the motor 2 as described in relation to the earlier figures, is running with a target rotational speed, such as 50 RPM. However, the actual rotational speed of the motor 202 will vary around 50 RPM, e.g. between 40 RPM and 60 RPM.

The motor 202 provides a motor readout 203. The motor readout 203 may comprise information of current drawn, voltage applied etc. From the motor readout 203, the rotational speed of the motor 202 may be determined. From the motor readout 203 speed ripples value, i.e. the variation of the rotational speed of the motor 202, is measured 204. For example, if the rotational speed of the motor 202 is varying between 40 RPM and 60 RPM, the speed ripple value 206 may be measured and output as 60 - 40 = 20 RPM. The speed ripple measurement 204 may be performed by comparing the lowest measured rotational speed with the highest measured rotational speed within a speed ripple sample time, such as 50 ms, or 100 ms.

The speed ripple value 206 is compared 210 with a speed ripple threshold 208, to provide a speed ripple error 212. For example, the speed ripple error 212 may be:

speed ripple error 212 = speed ripple value 206 - speed ripple threshold 208 Following the above example and the speed ripple threshold being set to, e.g. 5 RPM, the speed ripple error 212 will be 20 - 5 = 15 RPM.

The speed ripple error 212 may be input to a filter 214, such as a low-pass filter, in order to provide a more smooth operation of the motor 202, and to avoid too excessive changes.

The output of the filter 214 is an adjustment request 215, which is input to a motor controller 216, such as a PI controller, such as a PI controller configured to adjust the D-current of the motor 202. The motor controller 216 provides a motor control signal 218 to the motor 202, based on the adjustment request 215.

The regulation 200 may be run continuously. For example, motor readout 203 and speed ripple measurement 204 may be performed with a speed sampling rate of 1000 Hz or 10000 Hz.

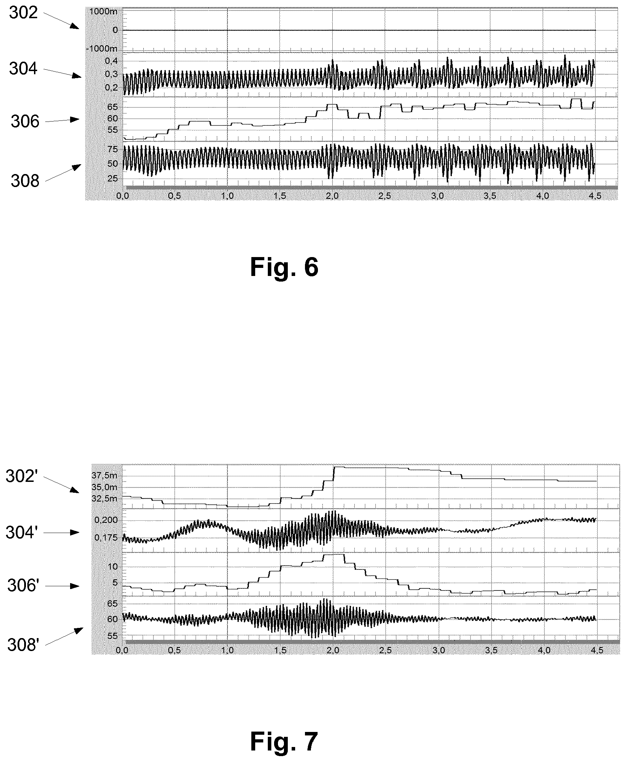

Fig. 6 shows exemplary traces of motor data where d-current is not applied.

The top trace 302 shows the d-current of the motor. In the example as shown in Fig. 6, d-current is not applied to the motor. The last trace 308 shows the rotational speed of the rotor of the motor. The target speed is set to approximately 60 RPM, and it is seen that the rotational speed varies between approximately 25 RPM and 80 RPM.

The difference between the lowest rotational speed and the highest rotational speed is shown in the second last trace 306 showing the speed ripple.

The second trace 304 from the top shows the q-current trace of the motor. In the example as shown in Fig. 6, the q-current varies between 0.1A and 0.4A. The reason for the variation is a regulation mechanism, varying the q-current, thereby varying the torque, based on the rotational speed of the rotor. The q-current is increased if the rotational speed of the rotor is below the target speed, and the q-current is decreased if the rotational speed is above the target speed.

Fig. 7 shows exemplary traces of motor data where d-current is applied.

The top trace 302' shows, as trace 302 in Fig. 6, the d-current of the motor. In the example as shown in Fig. 7, d-current is applied to the motor in accordance with the method as described in relation to the above figures.

The second trace 304' shows, as trace 304 in Fig. 6, the q-current of the motor.

The second last trace 306' shows, as trace 306 in Fig. 6, the speed ripple of the rotor.

The last trace 308' shows, as trace 308 in Fig. 6, the rotational speed of the rotor of the motor.

From the example of Fig. 7 it shows that when the speed ripple of the rotor (trace 306') increases, e.g. above a speed ripple threshold, the d-current (trace 302') is increased, which in turn decreases the speed ripple (trace 306'). When the speed ripple of the rotor (trace 306') again decreases, e.g. below the speed ripple threshold, the d-current (trace 302') is decreased.

Consequently the rotational speed of the rotor, as shown in trace 308', fluctuates less than is seen in Fig. 6, e.g. the speed ripple is reduced to less than 5 RPM, reducing possible induced vibrations in the system.

Although particular features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications and equivalents.

LIST OF REFERENCES

2, 2'    motor system

| 4 | processing unit |
|---|---|
| 6 | motor |
| 8 | stator |
| 10 | rotor |
| 12 | heat exchanger |
| 14 | stator - heat exchanger connection |
| 16 | motor signal(s) |

| 100, 100' | method |
|---|---|
| 102 | obtaining rotational speed |
| 104 | obtaining speed ripple value |
| 106, 106' | adjusting d-current |
| 108, 108' | condition |
| 110 | increasing the d-current |
| 112 | decreasing the d-current |

| 200 | regulation |
|---|---|
| 202 | motor |
| 203 | motor readout |
| 204 | speed ripple measurement |
| 206 | speed ripple value |
| 208 | speed ripple threshold |
| 210 | comparison |
| 212 | speed ripple error |
| 214 | filter |
| 215 | adjustment request |
| 216 | motor controller |
| 218 | motor control signal |

| 302, 302' | d-current trace |
|---|---|
| 304, 304' | q-current trace |
| 306, 306' | speed ripple trace |
| 308, 308' | rotational speed trace |

**Claims**

1. A method (100, 100') for controlling a motor (6) comprising a rotor (10) having at least one permanent magnet and a stator (8) configured to provide a magnetic field for rotation of the rotor (10), and wherein the magnetic field is controlled by a q-current and a d-current, the q-current controlling a q-component of the magnetic field causing torque on the rotor (10), the d-current controlling a d-component of the magnetic field perpendicular to the q-component, the method comprising:

    - obtaining (102) rotational speed of the rotor (10), **characterized by**
    - obtaining (104) a speed ripple value (206) by comparing lowest rotational speed with highest rotational speed within a speed ripple sample time; and
    - adjusting (106, 106') the d-current through the motor (6) based on the speed ripple value (206) and a speed ripple threshold (208).

2. Method according to claim 1, wherein adjusting (106, 106') the d-current comprises, in accordance (108, 108') with the speed ripple value (206) being above the speed ripple threshold (208), increasing (110) the d-current through the motor (6) to increase the d-component of the magnetic field.

3. Method according to claim 1, wherein adjusting (106, 106') the d-current comprises, in accordance (108, 108') with the speed ripple value (206) being above the speed ripple threshold (208) and the d-current being below a d-current threshold, increasing (110) the d-current through the motor to increase the d-component of the magnetic field.

4. Method according to any of the preceding claims, wherein adjusting (106, 106') the d-current comprises, in accordance (108, 108') with the speed ripple value (206) being below the speed ripple threshold (208), decreasing (112) the d-current through the motor (6) to decrease the d-component of the magnetic field.

5. Method according to any of the preceding claims, wherein adjusting (106, 106') the d-current is further based on the rotational speed of the rotor (10), and wherein, in accordance with the rotational speed being below a rotational speed threshold, the d-current is set to a constant d-current value.

6. Method according to any of the preceding claims wherein the speed ripple sample time is between 10-500 ms, such as 50 ms or 100 ms.

7. Method according to any of the preceding claims wherein measuring rotational speed of the motor (6) comprises measuring rotational speed of the motor (6) with a speed sampling rate of more than 100 Hz, such as 1000 Hz or 10000 Hz.

8. Method according to any of the preceding claims, wherein the speed ripple threshold (208) is set to an absolute value, such as an absolute value based on a speed limit of the motor (6).

9. Method according to any of the preceding claims, wherein obtaining (102) the rotational speed of the rotor (10) is performed using a back EMF observer.

10. A motor system (2, 2') comprising:

   - a motor (6) comprising a rotor (10) having at least one permanent magnet and a stator (8) configured to provide a magnetic field for rotation of the rotor (10), and wherein the magnetic field is controlled by a q-current and a d-current, the q-current controlling a q-component of the magnetic field causing torque on the rotor (10), the d-current controlling a d-component of the magnetic field perpendicular to the q-component;
   - a processing unit (4) being connected to the motor (6);

   the processing unit (4) being configured to:

   - obtain rotational speed of the rotor (10), **characterized in that** the processing unit (4) being further configured to:
   - obtain a speed ripple value (206) by comparing lowest rotational speed with highest rotational speed within a speed ripple sample time; and
   - adjust the d-current through the motor (6) based on the speed ripple value (206).

11. Motor system (2, 2') according to claim 10 comprising a rotational heat exchanger (12), the rotational heat exchanger (12) being coupled to the rotor (10) of the motor (6) by a belt (14), such that rotation of the rotor (6) causes rotation of the rotational heat exchanger (12).

100

```
      ┌──────────────┐
      │     102      │
      └──────────────┘
             │
             ▼
      ┌──────────────┐
      │     104      │
      └──────────────┘
             │
             ▼
  ┌──────────────────────────────────────────┐
  │ 106                                        │
  │              ◇                             │
  │            ◇ 108 ◇                         │
  │              ◇                             │
  │     │                      │               │
  │     ▼                      ▼               │
  │ ┌──────────┐         ┌──────────┐          │
  │ │   110    │         │   112    │          │
  │ └──────────┘         └──────────┘          │
  └──────────────────────────────────────────┘
```

# Fig. 1

100'

| | |
|---|---|
| | 102 |

| |
|---|
| 104 |

106'

108'

| |
|---|
| 110 |

| |
|---|
| 112 |

# Fig. 2

**Fig. 3**

**Fig. 4**

200

206—204◄—203—202

208→210

218

212→214—215→216

**Fig. 5**

**Fig. 6**

**Fig. 7**

Europäisches
Patentamt

European
Patent Office

Office européen
des brevets

# EUROPEAN SEARCH REPORT

Application Number

EP 18 15 9965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2006 333598 A (CANON FINETECH INC) 7 December 2006 (2006-12-07) * paragraph [0017] - paragraph [0041]; figures 1,2 * | 1-11 | INV.<br>H02P6/10<br>H02P21/05<br>H02P21/18 |
| Y | SANDRO CALLIGARO ET AL: "Accuracy and robustness improvement in sensorless PMSM drives at low-speed by direct-axis current injection", SENSORLESS CONTROL FOR ELECTRICAL DRIVES (SLED), 2012 IEEE SYMPOSIUM ON, IEEE, 21 September 2012 (2012-09-21), pages 1-5, XP032322085, DOI: 10.1109/SLED.2012.6422798 ISBN: 978-1-4673-2966-8 * the whole document * | 1-11 | ADD.<br>H02P8/32 |
| A | ANTONIOLI ANDREA ET AL: "A low cost sensorless drive for hybrid stepper motors based on back-EMF observer and d-axis current injection for industrial labelling machines", 2014 IEEE APPLIED POWER ELECTRONICS CONFERENCE AND EXPOSITION - APEC 2014, IEEE, 16 March 2014 (2014-03-16), pages 2492-2499, XP032590825, DOI: 10.1109/APEC.2014.6803654 [retrieved on 2014-04-21] * the whole document * | 1-11 | |
| A | US 2004/070364 A1 (CHEONG DAL HO [KR] ET AL) 15 April 2004 (2004-04-15) * paragraph [0007]; figures 1-5 * * paragraph [0018] - paragraph [0045] * | 1-11 | TECHNICAL FIELDS SEARCHED (IPC)<br><br>H02P |

-/--

The present search report has been drawn up for all claims

| Place of search | Date of completion of the search | Examiner |
|---|---|---|
| Munich | 11 July 2018 | Gospodinova, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 15 9965

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/031912 A1 (HONG YOUNGHO [KR] ET AL) 10 February 2011 (2011-02-10) <br> * paragraph [0003]; figures 2-11 * <br> * paragraph [0036] - paragraph [0139] * <br> ----- | 1-11 | |

TECHNICAL FIELDS
SEARCHED (IPC)

The present search report has been drawn up for all claims

| Place of search | Date of completion of the search | Examiner |
|---|---|---|
| Munich | 11 July 2018 | Gospodinova, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 15 9965

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2018

| Patent document cited in search report | | Publication date | Patent family member(s) | | Publication date |
|---|---|---|---|---|---|
| JP 2006333598 | A | 07-12-2006 | NONE | | |
| US 2004070364 | A1 | 15-04-2004 | CN | 1489278 A | 14-04-2004 |
| | | | DE | 10341106 A1 | 06-05-2004 |
| | | | JP | 3803659 B2 | 02-08-2006 |
| | | | JP | 2004135491 A | 30-04-2004 |
| | | | KR | 20040032647 A | 17-04-2004 |
| | | | US | 2004070364 A1 | 15-04-2004 |
| US 2011031912 | A1 | 10-02-2011 | CN | 101997479 A | 30-03-2011 |
| | | | EP | 2296263 A2 | 16-03-2011 |
| | | | US | 2011031912 A1 | 10-02-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160254772 A1